# EUROPEAN PATENT APPLICATION

(11) **EP 4 597 395 A1**
(43) Date of publication of application: **06.08.2025**
(21) Application number: 23880269.8
(22) Date of filing: 19.10.2023
(51) Int. Cl.: G06Q 20/32, G06Q 20/16, H04W 4/80

(54) **METHOD AND APPARATUS FOR PROVIDING PAYMENT SERVICE BY USING ULTRA-WIDEBAND COMMUNICATION**

(30) Priority: 19.10.2022 KR 20220135016
(71) Applicant: Samsung Electronics Co., Ltd., Suwon-si, Gyeonggi-do 16677 (KR)
(72) Inventor: GU, Jonghoe, Suwon-si, Gyeonggi-do 16677 (KR); KEUM, Jieun, Suwon-si, Gyeonggi-do 16677 (KR)
(74) Representative: Nederlandsch Octrooibureau
(86) International application number: PCT/KR2023/016292
(87) International publication number: WO 2024/085694

(57) **Abstract**

The present disclosure discloses a method for providing a service by using UWB communication. The operation method of a first ultra- wideband (UWB) apparatus according to an embodiment of the present disclosure comprises the operations of: receiving, from a second UWB apparatus, an advertisement message including UWB payment identifier information indicating a payment method supported for a payment service between the first UWB apparatus and the second UWB apparatus and location information (a retail identifier) via which the payment service is performed; performing UWB ranging on the basis of the UWB payment identifier information and the location information (the retail identifier) via which the payment service is performed; and performing a payment transaction on the basis of the result of the UWB ranging.

## Description

### [Technical Field]

The disclosure relates to UWB communication and, more specifically, to a method and device for providing a payment service using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Invention]

### [Technical Problem]

The disclosure discloses a method for providing a payment service through UWB communication.

### [Technical Solution]

According to an embodiment of the disclosure, a method for operating a first ultra-wide band (UWB) device may comprise receiving, from a second UWB device, an advertisement message including UWB payment identification information (UWB payment identifier) indicating a payment method supported by a payment service between the first UWB device and the second UWB device and location information (retail identifier) about a location where the payment service is performed, performing UWB ranging based on the UWB payment identification information (UWB payment identifier) and the location information (retail identifier) about the location where the payment service is performed, and performing a payment transaction based on a result of the UWB ranging.

According to an embodiment, the advertisement message may be configured according to a BLE advertisement message format. According to an embodiment, the advertisement message may be configured according to a UWB advertisement message format.

According to an embodiment, the UWB payment identification information (UWB payment identifier) may include any one of information indicating downlink time difference of arrival (DL-TDoA) support, information indicating contention-based ranging support, information indicating in-band UWB payment transaction support, and reserved future use (RFU).

According to an embodiment, the location information (retail identifier) about the location where the payment service is performed may include at least one of name information about a retail store where the payment service is performed and type information about the retail store.

According to an embodiment, the advertisement message may further include UWB configuration information (UWB configuration), and the UWB configuration information may include at least one of a UWB session ID, a service ID, a UWB configuration ID, a channel number, and a device role.

According to an embodiment, a payment profile manager in a framework of the first UWB device may control the first UWB device to simultaneously or sequentially use a plurality of UWB ranging methods.

According to an embodiment, the payment profile manager may set a state transition diagram for processing the plurality of UWB ranging methods.

According to an embodiment, the operation method of the first UWB device may further comprise setting a payment-available zone based on at least one of an angle of arrival (AoA) azimuth, a range of an AoA elevation value, and a distance value according to a result of TWR.

According to an embodiment of the disclosure, a first ultra-wideband (UWB) device may comprise a transceiver, and a controller. The controller may receive, from a second UWB device, an advertisement message including UWB payment identification information (UWB payment identifier) indicating a payment method supported by a payment service between the first UWB device and the second UWB device and location information (retail identifier) about a location where the payment service is performed. The controller may perform UWB ranging based on the UWB payment identification information (UWB payment identifier) and the location information (retail identifier) about the location where the payment service is performed. The controller may perform a payment transaction based on a result of the UWB ranging.

### [Advantageous Effects]

A method and device according to an embodiment of the disclosure may provide a payment service via UWB communication.

### [Brief Description of Drawings]

FIG. 1 illustrates an example architecture of a UWB device according to an embodiment of the disclosure;
FIG. 2 is a view illustrating an example configuration of a framework included in an electronic device supporting a UWB-based service according to an embodiment of the disclosure;
FIG. 3A illustrates a structure of a UWB MAC frame according to an embodiment of the disclosure;
FIG. 3B illustrates a structure of a UWB PHY packet according to an embodiment of the disclosure;
FIG. 4 illustrates an example of a ranging block structure according to an embodiment of the disclosure;
FIG. 5 illustrates an architecture including a customer device, a merchant device, and a payment infrastructure according to an embodiment of the disclosure;
FIG. 6 illustrates an example of a payment-available zone according to an embodiment of the disclosure;
FIG. 7 is a view illustrating a ranging block structure according to an embodiment of the disclosure;
FIGS. 8A and 8B are views illustrating operations of devices for tap-free payment according to an embodiment of the disclosure;
FIG. 9 illustrates a payment transaction data exchange procedure during ranging according to an embodiment of the disclosure;
FIG. 10 illustrates a payment transaction data exchange procedure using data transfer or session according to an embodiment of the disclosure;
FIG. 11 illustrates an example of a state transition diagram according to an embodiment of the disclosure;
FIG. 12 illustrates an example of direct communication for a payment procedure according to an embodiment of the disclosure;
FIG. 13 illustrates an example of indirect communication for a payment procedure according to an embodiment of the disclosure;
FIG. 14 illustrates a structure of a first UWB device according to an embodiment of the disclosure; and
FIG. 15 illustrates a structure of a second UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages). The controller may define and control ranging features by transmitting a control message.

"Controlee" may be a ranging device using a ranging parameter in the RCM (or control message) received from the controller. The controlee may use the same ranging features as those configured through control messages from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. The applet may be a FiRa applet.

"Ranging device" may be a device capable of performing UWB ranging. In the disclosure, the ranging device may be an enhanced ranging device (ERDEV) defined in IEEE 802.15.4z or a FiRa Device. The ranging device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. "UWB-enabled Application" may be abbreviated as an application or a UWB application. UWB-enabled Application may be a FiRa-enabled Application.

"Framework" may be a component that provides access to Profiles, individual-UWB configuration and/or notifications. "Framework" may be, e.g., a collection of logical software components including Profile Manager, OOB Connector, Secure Service, and/or UWB service. The framework may be a FiRa framework.

"OOB Connector" may be a software component for establishing an out-of-band (OOB) connection (e.g., BLE connection) between Ranging Devices. The OOB connector may be a FiRa OOB connector.

"Profile" may be a previously defined set of UWB and OOB configuration parameters. The profile may be a FiRa profile.

"Profile Manager" may be a software component that implements a profile available on the Ranging Device. The profile manager may be a FiRa profile manager.

"Service" may be an implementation of a use case that provides a service to an end-user.

"Smart Ranging Device" may be a ranging device that may implement an optional Framework API. The smart ranging device may be a FiRa smart device.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange. The initiator may initiate a ranging exchange by transmitting a first RFRAME (ranging exchange message).

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange. The responder may respond to the ranging exchange message received from the initiator.

"STS" may be a ciphered sequence for increasing the integrity and accuracy of ranging measurement timestamps. The STS may be generated from the ranging session key.

"Secure channel" may be a data channel that prevents overhearing and tampering.

"Secure component" may be an entity (e.g., secure element (SE) or trusted execution environment (TEE)) having a defined security level that interfaces with UWBS for the purpose of providing RDS to UWBS, e.g., when dynamic STS is used.

"SE" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or TEE.

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the Controller and the Controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. The UWB session key may be a UWB ranging session key (URSK), and may be abbreviated as a session key.

"UWB Subsystem (UWBS)" may be a hardware component implementing the UWB PHY and MAC layers specifications. UWBS may have an interface to Framework and an interface to Secure Component to search for RDS.

"UWB message" may be a message including a payload information element (IE) transmitted by the UWB device (e.g., ERDEV).

"Payload IE" may be an IE included in the MAC payload of the UWB MAC frame. The MAC payload may include one or more payload IEs.

"Scheduled-based ranging" may be used for the ranging round scheduled by the controller for the controllees to transmit ranging frames (RFRAMEs) and/or measurement reports in different ranging slots. Scheduling-based ranging may be referred to as time-scheduled ranging. A scheduling mode in which scheduling-based ranging is used may be referred to as a time-scheduled mode.

"Contention-based ranging" may be used when the controller does not know the MAC addresses of controllees participating in the UWB session (ranging session). In contention-based ranging, the controller may be an initiator and may perform ranging with other unknown UWB devices. The scheduling mode in which contention-based ranging is used may be referred to as a contention-based mode.

The contention-based ranging may be used for the ranging round in which the controller determines the size of the contention access period and indicates the CAP size through a ranging control message. The CAP may be referred to as a contention window or a contention window period.

In the contention-based mode, the UWB device may operate as a controller and an initiator, and in this case, the ranging control phase (RCP) and the ranging initiation phase (RIP) may be merged into one phase (e.g., RIP). In the ranging phase (RP), the allocation of the CAP size may determine the CAP period for the responder(s) participating in the corresponding ranging round in units of ranging slots. Each responder may randomly determine one slot in the CAP to transmit a ranging response message (RRM). Messages used in contention-based ranging may use SP1 as an RFRAME configuration.

"Hybrid ranging" may be used when there is a known controllee and an unknown controllee. As described above, the known controllee may be a controllee whose MAC address is known to the controller, and the unknown controllee may be a controllee whose MAC address is not known to the controller. In this disclosure, hybrid ranging may be referred to as hybrid-based ranging. The scheduling mode in which hybrid ranging is used may be referred to as a hybrid-based mode.

In the hybrid-based mode, the controller may perform ranging with the known controllee in the scheduling-based mode and with the unknown controllee in the contention-based mode.

In the hybrid-based mode, the ranging round may include a ranging control phase RCP and a ranging phase RP. The RP may include a contention free period for scheduling-based ranging (access) and a contention access period (CAP) for contention-based ranging (access). The control message (ranging control message) used in the RCP of the hybrid-based mode may be referred to as a ranging management message (RMM).

"Downlink Time Difference of Arrival (DL-TDoA, DT)" may be a positioning method for one or more tag devices (DT-Tag) to estimate their position based on the DL-TDoA message (DTM) received from at least one anchor device (DT-anchor). In DL-TDoA, the anchor device transmits or broadcasts the DTM, and the tag device passively receives the DTM, thereby preventing exposure of the position of the tag device.

In DL-TDoA, the anchor device may precisely measure its own DTM transmission time and the reception time of the received DTM. The anchor device may include the transmission time in the DTM it transmits or broadcasts. The tag device may measure the reception times of all received DTMs and estimate its position by using the reception timestamps and obtained coordinates of the anchor devices. DL-TDoA may be classified as a type of one way ranging like Uplink TDoA. DL-TDoA may be referred to as DL-TDoA localization.

"Anchor device" may be a UWB device deployed at a specific position to provide a positioning service. For example, the anchor device may be a UWB device installed by a service provider on a wall, ceiling, structure, or the like in a room to provide an indoor positioning service. In DL-TDoA, the anchor device may be a device that transmits the DTM that the tag device may use to calculate the position based on TDoA localization (DL-TDoA localization). In DL-TDoA, the anchor devices may be divided into the initiator anchor and responder anchors according to the order and role of transmitting messages and participate in the ranging round. The anchor device may be referred to as a UWB anchor or a UWB anchor device. The anchor device of DL-TDoA may be referred to as a DL-TDoA anchor or DT-anchor.

The "initiator anchor" may notify of the initiation of the TDoA ranging round (DL-TDoA ranging round). In DL-TDoA, the initiator anchor may initiate a DL-TDoA ranging round by transmitting an initiation message and may schedule the transmission time of the responder anchor(s). For example, the initiator anchor may schedule the ranging slot in which the responder anchor(s) operating in the same ranging round sends a response message (response DTM). The initiation message may be referred to as an initiator DTM, a poll message, a poll DTM, or a first DTM. The initiator anchor may be referred to as an initiator UWB anchor, an initiator anchor device, or an initiator DT-anchor.

The initiator anchor may additionally transfer an end message (final DTM) message after receiving the response from the responder anchor(s). The initiator anchor may additionally transmit a final DTM after all responder anchors in the same cluster transmit a response message (response DTM) in the DL-TDoA ranging round. The end message may be referred to as final DTM or third DTM.

There may be at least one reference initiator anchor in the DL-TDoA network. The reference initiator anchor serves as a global time reference for inter-cluster synchronization as an initiator anchor, and may configure a common ranging block structure for the DL-TDoA network to operate. The reference initiator anchor may be referred to as a master anchor or a global anchor.

The responder anchor may be a UWB anchor responding to the initiation message of the initiator anchor. The responder anchor may respond to the initiator anchor with a response message. The response message may be referred to as a responder DTM, a response DTM, or a second DTM. The "responder anchor" may also be referred to as a Responder UWB anchor, a Responder UWB anchor device, a Responder anchor device, etc.

The "tag device" may estimate its position (e.g., geographical coordinates) by using TDoA measurement based on the DTM received from the anchor device in DL-TDoA. The tag device may previously know the position of the anchor device. The tag device may be referred to as a UWB tag, user equipment (UE), or UWB tag device, and the DL-TDoA tag device may be referred to as a DL-TDoA tag or a DT-tag.

The tag device may receive the message transmitted by the anchor device and measure the reception time of the message. The tag device may obtain the geographic coordinates of the anchor device through an in-band or out-band method. The tag device may skip the ranging block when the position update rate is lower than that supported by the network.

"Cluster" may mean a set of anchor devices covering a specific area. In DL-TDoA, cluster may mean a set of anchor devices that exchange DTMs to provide a position service to at least one tag device. The cluster may be constituted of an initiator anchor and at least one responder anchor.

One anchor device may operate in one or more clusters. In this case, the anchor device acting as an initiator anchor in some clusters may act as a responder anchor in other clusters. The cluster area may be a space formed by the anchor devices constituting the cluster. To support the positioning service for a wide area, a plurality of clusters may be configured to provide the positioning service to the UE. Cluster may be referred to as a cell.

"AoA" is the angle of arrival of a reception signal, and may be expressed as a relative angle, such as AoA azimuth and AoA elevation. For example, it may be assumed that the measuring device is a mobile phone with a display, the Y axis is the vertical display axis of the phone, the X axis is the horizontal display axis of the phone, and the Z axis is perpendicular to the phone display. In this case, the AoA azimuth angle may be a relative angle between the input signal projected on the XZ plane and the Z axis, and the AoA elevation angle may be a relative angle between the input signal and the XZ plane.

In the case of TWR, the controller (initiator) may measure the AoA azimuth for RRM, and may transmit the measured AoA azimuth through the UCI notification message. The controllee (responder) may measure the AoA azimuth for the RIM message, and may transmit the measured AoA azimuth through the RRRM.

In the case of TWR, the controller (initiator) may measure the AoA elevation for the RRM, and may transmit the measured AoA elevation through the UCI notification message. The controllee (responder) may measure the AoA elevation for the RIM message, and may transmit the measured AoA elevation through the RRRM.

In the case of OWR, the observer may measure AoA azimuth and AoA elevation for AoA measurement messages.

"Data message payload information element (DM payload IE)" may be a payload IE used to including data generated from an application, applet, or other data source in a UWB message and transmitting the same. In the disclosure, the data message payload IE may also be simply referred to as a data message. The data message payload IE may be combined with the ranging payload IE as shown in FIG. 23 to become part of the PHY payload of the UWB message.

The data message payload IE may be constituted of, or include some of, the vendor OUI, UWB message identifier (ID), data message (DM) type, and content field.

According to the data message type, the content of the message included in the content field may vary. If the value of the data message type (DM type) field is 0x0, the content field may include general application data. The content field may additionally include the length of the application data being transferred. The content field may also include a MAC data service data unit (MDSDU), which is data generated by a higher layer than the MAC layer of the UWB subsystem and transferred to the MAC, as a payload.

When the value of the data message type (DM type) field of the IE of the data message payload is 0x1, the content field may include a data transfer phase control message (DTPCM).

When determined to make the subject matter of the present invention unnecessarily unclear, the detailed description of related known functions or features may be skipped in describing the disclosure.

Hereinafter, various embodiments of the disclosure are described with reference to the accompanying drawings.

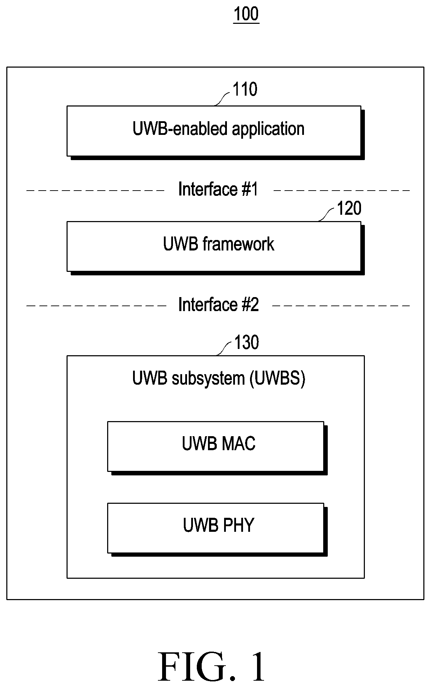

FIG. 1 illustrates an example architecture of a UWB device according to an embodiment of the disclosure.

The UWB device 100 may be an electronic device supporting UWB communication. The UWB device 100 may be, e.g., a ranging device supporting UWB ranging. In an embodiment, the ranging device may be an enhanced ranging device (ERDEV) defined in IEEE 802.15.4z or a FiRa Device.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

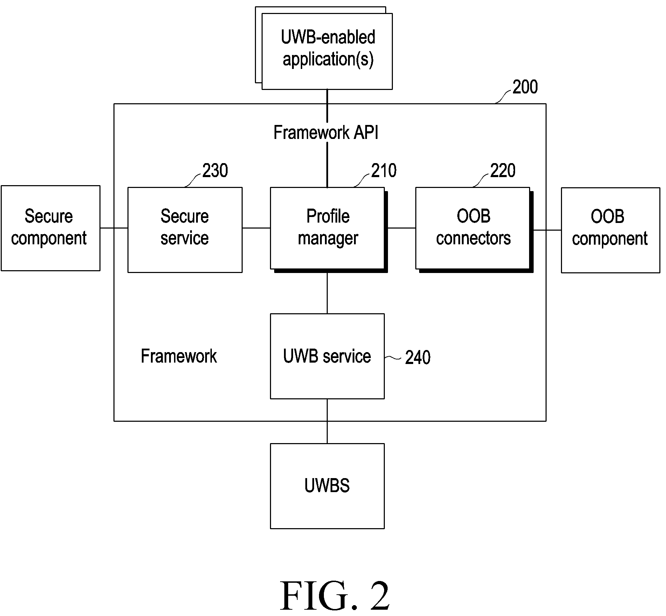

FIG. 2 is a view illustrating an example configuration of a framework included in an electronic device supporting a UWB-based service according to an embodiment of the disclosure.

The framework 200 of FIG. 2 may be an example of the framework 120 of FIG. 1. The framework 200 of FIG. 2 may be a FiRa framework.

The framework 200 may be a set of logical software components. The UWB-enabled application may interface with the framework 200 through the framework API provided by the framework.

Referring to FIG. 2, the framework 200 may include a profile manager 210, an OOB connector 220, a secure service 230, and/or a UWB service 240. According to an embodiment, some components may be omitted, and an additional component may further be included.

The profile manager 210 may manage a profile(s) available on the ranging device (UWB device). The profile may be a set of parameters required to establish a successful UWB session between ranging devices (UWB devices). For example, a profile may include a parameter indicating which secure channel (e.g., OOB secure channel) is used, a UWB/OOB configuration parameter, a parameter indicating whether the use of a particular secure component is mandatory, and/or a parameter related to the file structure of the ADF. The profile manager 310 may abstract the UWB and OOB configuration parameters from the UWB-enabled application.

The OOB connector 220 may be a component for establishing an OOB connection between ranging devices (UWB devices).

The secure service 230 may serve to interface with a secure component, such as a secure element (SE) or trusted execution environment (TEE). The secure component may be a component that interfaces with the UWBS to transfer UWB ranging data to the UWBS.

The UWB service 240 may be a component that provides access to the UWBS.

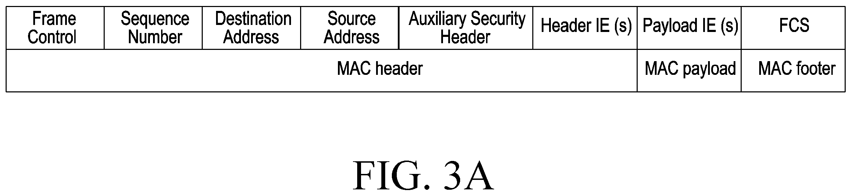

FIG. 3A illustrates a structure of a UWB MAC frame according to an embodiment of the disclosure.

In the embodiment of FIG. 3A, the UWB MAC frame may be simply referred to as a MAC frame or frame. As an embodiment, the UWB MAC frame may be used to transfer UWB-related data (e.g., UWB message, ranging message, control information, service data, application data, etc.).

Referring to FIG. 3A, the UWB MAC frame may include a MAC header (MHR), a MAC payload and/or a MAC footer (MFR).

### (1) MAC header

The MAC header may include a Frame Control field, a Sequence Number field, a Destination Address field, a Source Address field, an Auxiliary Security Header field, and/or at least one Header IE field. According to an embodiment, some of the above-described fields may not be included in the MAC header, and additional field(s) may be further included in the MAC header.

In an embodiment, the Frame Control field may include a Frame type field, a Security Enabled field, a Frame Pending field, an ack request (AR) field, a PAN ID Compression field (PAN ID Present field), a Sequence Number Suppression field, an IE Present field, a Destination Addressing Mode field, a Frame Version field, and/or a Source Addressing Mode field. According to an embodiment, some of the above-described fields may not be included in the Frame Control field. Additional field(s) may be further included in the Frame Control field.

Each field is described below.

The Frame Type field may indicate the frame type. As an embodiment, the frame type may include a data type and/or a multipurpose type.

The Security Enabled field may indicate whether an Auxiliary Security Header field exists. The Auxiliary Security Header field may include information required for security processing.

The Frame Pending field may indicate whether the device transmitting the frame has more data for the recipient. In other words, the Frame Pending field may indicate whether there is a pending frame for the recipient.

The Ack Request (AR) field may indicate whether acknowledgment for frame reception is required from the recipient.

The PAN ID Compression field (PAN ID Present field) may indicate whether the PAN ID field exists.

The Sequence Number Suppression field may indicate whether the Sequence Number field exists. The Sequence Number field may indicate the sequence identifier for the frame.

The IE Present field may indicate whether the Header IE field and the Payload IE field are included in the frame.

The Destination Addressing Mode field may indicate whether the Destination Address field may include a short address (e.g., 16 bits) or an extended address (e.g., 64 bits). The Destination Address field may indicate the address of the recipient of the frame.

The Frame Version field may indicate the frame version. For example, the Frame Version field may be set to a value indicating IEEE std 802.15.4z-2020.

The Source Addressing Mode field may indicate whether the Source Address field exists, and if the Source Address field exists, whether the Source Address field includes a short address (e.g., 16 bits) or an extended address (e.g., 64 bits). The Source Address field may indicate the address of the originator of the frame.

### (2) MAC payload

The MAC payload may include at least one Payload IE field. In an embodiment, the Payload IE field may include a Vendor Specific Nested IE.

### (3) MAC footer

The MAC footer may include an FCS field. The FCS field may include a 16-bit CRC or a 32-bit CRC.

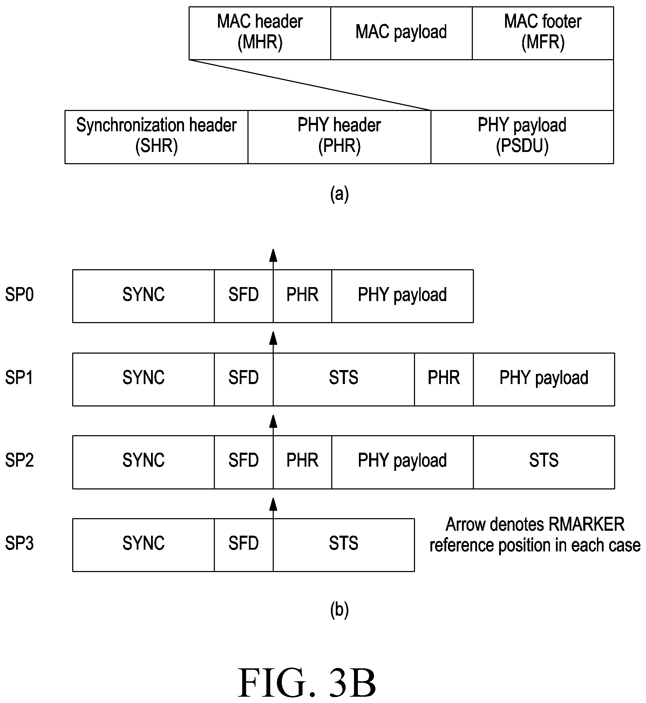

FIG. 3B illustrates a structure of a UWB PHY packet according to an embodiment of the disclosure.

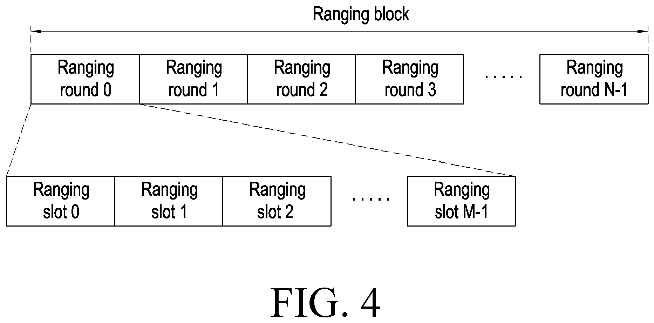

Part (a) of FIG. 3B illustrates an example structure of a UWB PHY packet to which the STS packet configuration is not applied, and part (b) of FIG. 4 illustrates an example structure of a UWB PHY packet to which the STS packet configuration is applied. The UWB PHY packet may be referred to as a PHY packet, a PHY PDU (PPDU), or a frame.

Referring to part (a) of FIG. 3B, the PPDU may include a synchronization header (SHR), a PHY header (PHR), and a PHY payload (PSDU). The PSDU may include a MAC frame. As shown in FIG. 4, the MAC frame may include a MAC header (MHR), a MAC payload and/or a MAC footer (MFR). The synchronization header part may be referred to as a preamble, and the part including the PHY header and the PHY payload may be referred to as a data part.

The synchronization header may be used for synchronization for signal reception and may include a SYNC field and a start-of-frame delimiter (SFD).

The SYNC field may be a field including a plurality of preamble symbols used for synchronization between transmission/reception devices. The preamble symbol may be set through one of previously defined preamble codes.

The SFD field may be a field indicating the end of the SHR and the start of the data field.

The PHY header may provide information about the configuration of the PHY payload. For example, the PHY header may include information about the length of the PSDU, information indicating whether the current frame is an RFRAME (or Data Frame), and the like.

Meanwhile, the PHY layer of the UWB device may include an optional mode to provide a reduced on-air time for high density/low power operation. In this case, the UWB PHY packet may include an encrypted sequence (i.e., STS) to increase the integrity and accuracy of the ranging measurement timestamp. An STS may be included in the STS field of the UWB PHY packet and be used for secure ranging.

Referring to (b) of FIG. 3B, in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the PPDU does not include the PHR and PHY payload.

As illustrated in part (b) of FIG. 3B, each UWB PHY packet may include RMARKER for defining a reference time. RMARKER may be used to obtain the transmission time, reception time and/or time range of the ranging message (frame) in the UWB ranging procedure.

FIG. 4 illustrates an example of a ranging block structure according to an embodiment of the disclosure.

Referring to FIG. 4, one ranging block may include at least one ranging round. Each ranging round may include at least one ranging slot. For example, as shown, one ranging block includes N ranging rounds (e.g., ranging round index 0 to ranging round index N-1), and ranging round #0 includes M ranging slots. (e.g., ranging slot 0 to ranging slot M).

The ranging block refers to a time period for ranging. The ranging round may be a period of sufficient duration to complete one entire range-measurement cycle (ranging cycle) in which a set of ranging devices participating in a ranging exchange involves. The ranging slot may be a sufficient period for transmission of at least one ranging frame (RFRAME) (e.g., ranging initiation/reply/final message, etc.).

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The ranging block may be abbreviated as a block, the ranging round as a round, and the ranging slot as a slot.

The disclosure proposes operations of a higher layer for supporting a tap-free payment service using at least one UWB ranging method (defined in FiRa consortium).

According to an embodiment, the UWB ranging method may be implemented as any one of time-scheduled two-way ranging, contention-based two-way ranging (TWR), OWR for one-way ranging (OWR) downlink tdoa (time difference of arrival) ranging method, OWR uplink tdoa ranging method, AoA measurement ranging method, hybrid ranging, data transfer during ranging, and data transfer phase.

The tap-free payment service may refer to a service of performing payment by exchanging data for direct payment or online payment (in-app payment) through a UWB channel after recognizing the distance between the customer device (or user device) and merchant device (clerk device) based on UWB ranging result values, rather than contact-based such as integrated circuit (IC) card or near-field communication (NFC) or contactless payment, and then performing a predetermined authentication procedure.

The customer device is a UWB-enabled device of a customer visiting a store, and may implement a function required to operate a tap-free payment service according to embodiments of the disclosure. The payment application may be an application installed on the customer device for the tap-free payment service.

The payment applet may be an applet executed in a secure element for the tap-free payment service.

The payment infrastructure may be an infrastructure distributed in a store capable of an out of band (OOB) and a UWB function. The payment infrastructure may interwork with a backend payment server through which the customer device may perform a payment transaction.

The merchant device may be a UWB-enabled device that supports a UWB function and has a point-of-sale (PoS) function.

The (Embodiment 1) to (Embodiment 4) proposed in the disclosure are as follows.

(Embodiment 1) A discovery process (discovery) between the merchant device (or clerk device) and the customer device (or user device) using UWB using a plurality of UWB ranging methods simultaneously or sequentially; a process in which the merchant device and the customer device perform UWB ranging or UWB secure ranging; a process in which the payment protocol is performed through the UWB channel;
- 1) Customer device, 2) clerk device, 3) UWB infrastructure of the store performing the process
- Payment profile manager in the FiRa framework of the customer device (or user device) in which the functions supporting the functions are implemented; the payment profile manager may be implemented in the application of the customer device or the merchant device or in the operating system (OS). The payment profile manager may be an object capable of transferring a command to the UWB S or a higher object thereof.
- The function of processing the plurality of UWB ranging methods may be managed and/or performed in the payment profile manager or an application of a higher layer thereof in the form of a state transition diagram.

(Embodiment 2) A method of defining a payment-available zone; and a method of setting and utilizing the payment-available zone in the customer device and/or the merchant device.
- The payment-available zone may be defined based on a distance measured through UWB ranging between the merchant device and the customer device and a measured angle of private (AoA).

(Embodiment 3) A method of minimizing interference between the plurality of UWB sessions by aligning the plurality of merchant devices and the plurality of UWB anchors in the store with respect to one reference UWB session.

(Embodiment 4) Set a payment service identifier for service identification and a store identifier (retail identifier) for providing store information.
- The payment service identifier may be an identifier indicating a list of a plurality of UWB ranging methods managed by the payment profile manager and a state transition diagram composed of them.

The main purpose of the FiRa tap-free payment profile is to provide technical solutions including essential UWB features and OOB mechanism sets that support tap-free payment services.

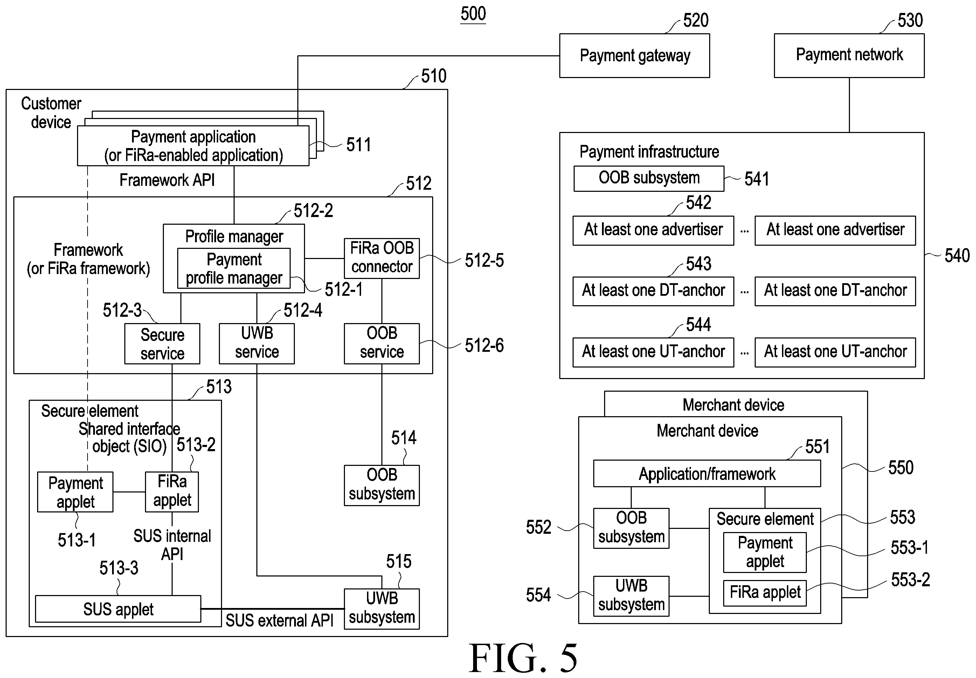

FIG. 5 illustrates an architecture including a customer device, a merchant device, and a payment infrastructure according to an embodiment of the disclosure.

Referring to FIG. 5, the architecture 500 may include a customer device 510, a payment gateway 520, a payment network 530, a payment infrastructure 540, and a merchant device 550.

The customer device 510 may include a payment application (or FiRa-enabled application) 511, a framework (or FiRa framework) 512, a secure element 513, an OOB subsystem 514, and a UWB subsystem 515.

The customer device 510 may receive at least one of a BLE advertisement and a UWB advertisement as an observer role.

The framework 512 may include a profile manager 512-2 including the payment profile manager 512-1, a secure service 512-3, a UWB service 512-4, a FiRa OOB connector 512-5, and an OOB service 512-6. The payment application 511 may be connected to the profile manager 512-2 through a framework API.

The payment profile manager 512-1 may initiate and/or manage a plurality of UWB sessions simultaneously or sequentially using various ranging methods. According to an embodiment, the ranging method may include at least one of TWR, DL-TDoA, UL-TDoA for AoA measurement, OWR, hybrid distance measurement, and data transmission during a distance measurement session.

The secure element 513 may include a payment applet 513-1, a FiRa applet 513-2, and a SUS applet 513-3. The FiRa applet 513-2 may be connected to the SUS applet 513-3 through the SUS internal API. The SUS applet 513-3 may be connected to the UWB subsystem 515 through the SUS external API.

The payment applet 513-1 may perform a payment transaction supported by a payment service provider. The payment applet 513-1 may set up a secure channel with the merchant device 550 by managing credentials for authentication and encryption key.

The payment infrastructure 540 may include an OOB subsystem 541, at least one advertiser 542, at least one DT-anchor 543, and at least one UT-anchor 544.

The merchant device 550 may include an application/framework 551, an OOB subsystem 552, a secure element 553, and a UWB subsystem 554. The secure element 553 may include a payment applet 553-1 and a FiRa applet 553-2.

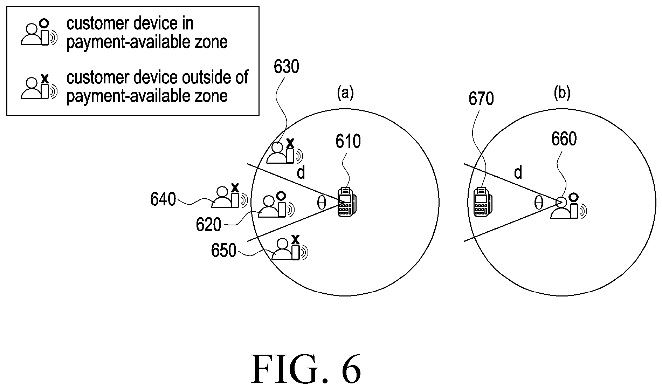

FIG. 6 illustrates an example of a payment-available zone according to an embodiment of the disclosure.

Referring to FIG. 6(a), the merchant device 610 may set a payment-available zone to perform a payment transaction with at least one customer device 620 among a plurality of customer devices 620, 630, 640, and 650. The merchant device 610 may set a payment-available zone based on the AoA azimuth θ measured by the merchant device 610 and/or at least one of the customer devices 620, 630, 640, and 650 and the distance d according to the result of the TWR.

Referring to FIG. 6B, the customer device 660 may limit a space in which a payment transaction is valid by setting its own payment-available zone. The customer device 660 may set a payment-available zone based on the AoA azimuth θ measured by the merchant device 670 and/or the customer device 660 and the distance d according to the result of the TWR.

According to an embodiment, the payment-available zone may be determined based on at least one of a range of AoA azimuth and/or AoA altitude values measured by the merchant device and/or the customer device, and a distance between the customer device and the merchant device as a result of the TWR.

According to an embodiment, the payment-available zone may be set by a payment service provider. In this case, a payment-available zone may be set for each merchant device in the store, and information about the payment-available zone may be transferred to the customer device through a BLE advertisement packet or a UWB advertisement message.

According to an embodiment, the payment transaction may be performed only when both the customer device and the merchant device are within the payment-available zone.

Meanwhile, at least one UWB session may be adjusted to prevent conflict and interference between the merchant devices and the UWB devices in the payment infrastructure. In the payment infrastructure, at least one of the merchant devices or UWB devices may operate as a time reference provider or a time reference device based on a reference time to sort the plurality of UWB sessions in the store.

According to an embodiment, the time reference provider will have the application configuration parameter, SESSION_TIME_BASE [UCI v2.0] set as 0b0 (reference time-based activation) as a value of octet 0, and in the payment infrastructure, other customer devices and UWB devices may set their SESSION_TIME_BASE as 0b1, i.e., disabled, as a value of octet 1, and set octet 1-5 of SESSION_TIME_BASE as a session handle of the reference session generated by the time reference provider.

When the store deploys a DL-TDoA network to provide an untracked navigation service [untracked navigation profile] to customer devices, the reference time base may be generated by the reference initiator DT-anchor [MAC v2.0].

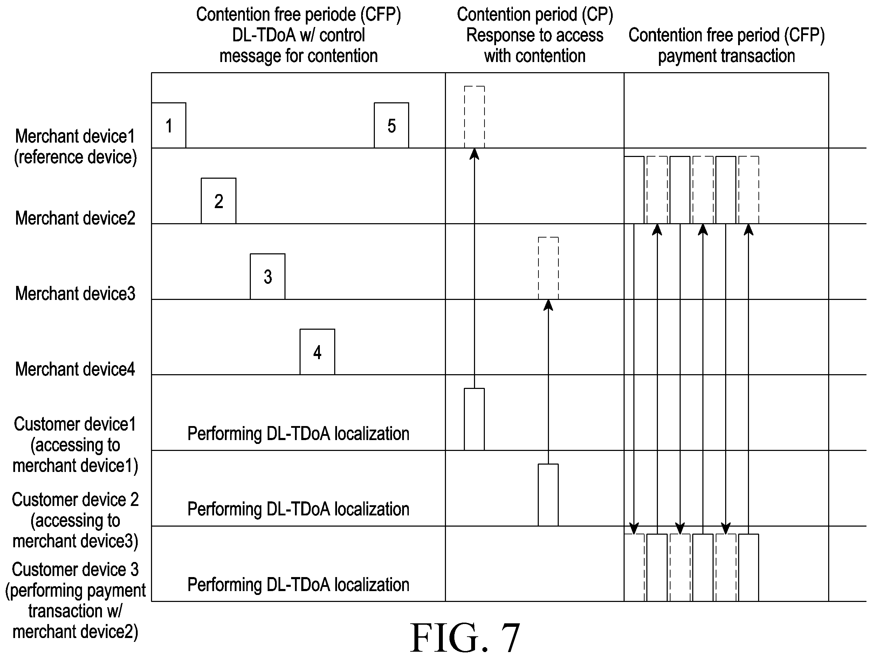

FIG. 7 is a view illustrating a ranging block structure according to an embodiment of the disclosure.

Referring to FIG. 7, for UWB tap-free payment service, merchant devices (merchant device 1 to merchant device 4) and customer devices (customer device 1 to customer device 3) may transmit and receive control messages for contention and messages and/or data in the first contention free period (CFP) for DL-TDoA, the contention period (CP) for a response message to contention access, and the second CFP for payment transaction.

The first merchant device (merchant device 1) may be set as a reference time device. The first customer device (customer device 1) may access the first merchant device (merchant device 1), the second customer device (customer device 2) may access the third merchant device (merchant device 3), and the third customer device (customer device 3) may access the second merchant device (merchant device 2).

### <First CFP for broadcasting of merchant device>

The first CFP provides the navigation service not tracked by the customer device and/or UWB anchors to the user device or customer devices in the store in the payment infrastructure; and/or the first CFP is used to transmit a ranging initiation message (RIM) including a control message for contention-based ranging.

### <CP for customer devices' response>

The CP may be used for customer devices to respond to the RIM with the CM for contention-based ranging. In the CP, the customer devices may randomly select a ranging slot used to respond to one of the RIMs corresponding to the customer device attempting to establish UWB sessions for payment transaction.

### <Second CFP for payment transaction>

The second CFP may be used for payment transactions. The merchant devices may adjust the start time of the CFP for payment transaction sessions based on appropriate time offset values configured by the store manager and the reference time base.

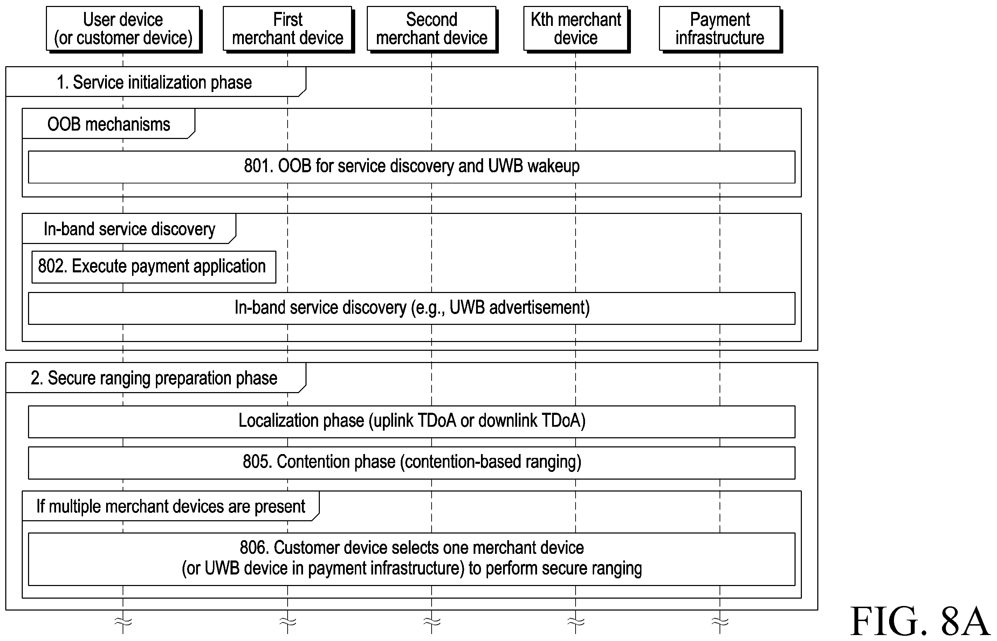

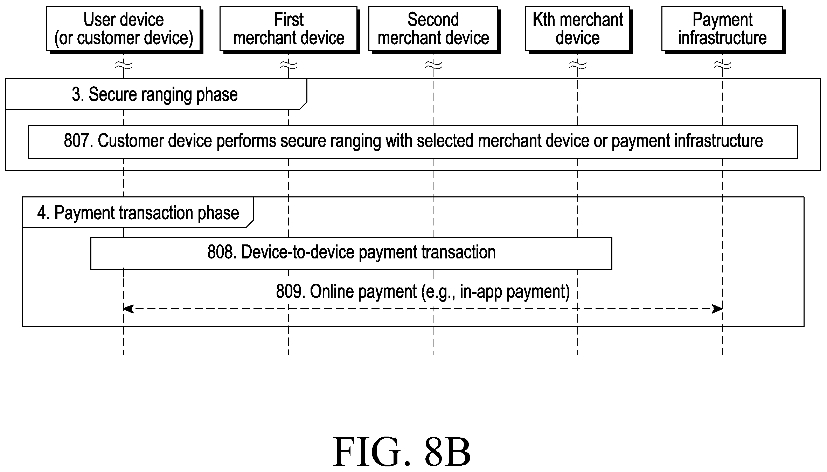

FIGS. 8A and 8B are views illustrating operations of devices for tap-free payment according to an embodiment of the disclosure.

Referring to FIGS. 8A and 8B, a system for tap-free payment may include a user device (or customer device), a first merchant device, a second merchant device, a K-th merchant device (where K is an integer of 3 or more), and a payment infrastructure.

In operation 801 within the service initialization phase, the payment infrastructure may support the use of OOB mechanisms (e.g., BLE) to automatically wake up the UWBS of the customer device and provide store information to the customer device.

In the service initialization phase, the customer device may obtain at least one of a payment service identifier, a retail identifier list, and order information about UWB ranging methods used to complete the payment transaction performed in the tap-free payment service. The customer device may obtain the at least one piece of information from the BLE device disposed in the store through a BLE advertisement packet or a UWB advertisement message transmitted by the UWB advertiser.

According to an embodiment, the BLE advertisement packet or the UWB advertisement message may include the following information:
*Payment service identifier: The payment service identifier may be used to identify a specific payment service. By using the payment service identifier, the customer device may recognize a supported payment application, a set of required UWB functionalities, and a supported payment transaction protocol. The payment service identifier may also be associated with a supported encryption algorithm and security protocol that may be used to set up a UWB secure ranging and/or secure data transfer session between the customer device and the merchant device.
*Retail store identifier: The retail store identifier may be used to identify a store. The retail store identifier may be, e.g., a store name or a service provider name.

Upon receiving the BLE advertisement packet, the customer device may perform at least one of the following procedures:
1. Prepares to start a set of UWB session(s) and/or UWB ranging methods using appropriate UWB configuration parameter sets mapped to the payment service identifier. When the user starts an appropriate payment application, the UWB session(s) may be initialized.
2. One of the payment applications supported by the store may be automatically started. When the payment application is configured as a default application by the user, the default payment application may be automatically started in the background.

In operation 802 within the service initialization phase, the customer device may execute the payment application installed in the customer device. The payment application may turn on the UWBS in the customer device.

According to an embodiment, the payment application will meet the following requirements.
*The payment application may be a FiRa-enabled application defined in the FiRa CSML standard.
*The payment application may start the UWB service through framework APIs defined in the FiRa CSML standard.
*The payment application may receive a BLE advertisement packet based on the FiRa out-of-band (OOB) channels supporting the BLE advertisement.
*The payment application may start the UWB service corresponding to the information included in the BLE advertisement packet received through the FiRa OOB channel.
*The payment application may access the FiRa payment profile manager using the framework API.
*The payment application may register itself in the FiRa framework through the FIRAServiceInit API as defined in section 10.3.1 of the FiRa CSML standard before starting its first tap-free payment service.

The payment application uses the FIRAServiceInit() function with the following parameters:
*ServiceConfiguration as defined in section 10.3.1.1 of the FiRa CSML standard
*UWBConfiguration defined in section 10.3.1.2 of the FiRa CSML standard
*OOBConfiguration as defined in section 10.3.1.3 of the FiRa CSML standard

In operation 803 within the service initialization phase, the customer device may initiate in-band service discovery through the payment application. The merchant devices and/or the payment infrastructure may transmit in-band service discovery messages, and the customer device may receive the in-band service discovery messages to identify the service and prepare the following procedures.

In operation 804 within the secure ranging preparation phase, the payment infrastructure may support an untracked navigation service so that the customer device estimates a location inside the store as a background operation. The untracked navigation service supported in the payment infrastructure may provide positioning accuracy required by the store, e.g., 1) positioning accuracy enough to determine which one is closest among the plurality of merchant devices in the store, or 2) positioning accuracy enough to identify the table number/area where the customer device is located.

According to an embodiment, two devices may be clearly distinguished under a specific precision by specifying a recommended distance between two adjacent merchant devices or check-out counters.

In operation 805 within the secure ranging preparation phase, the customer devices and merchant devices (or UWB devices in the payment infrastructure) may detect each other based on two-way ranging.

If a plurality of merchant devices are present in the secure ranging preparation phase, in operation 806, the customer device may select one merchant device (or UWB device in the payment infrastructure) to perform secure ranging. When detecting the plurality of devices (e.g., when the user device selects one of the merchant devices displayed on the UI, or points to one of the merchant devices that want to proceed with the payment procedure). At the same time, the merchant device (or UWB device in the payment infrastructure) may select one customer device to perform secure ranging (e.g., the employee manually identifies the device device/user identifier).

In the secure ranging preparation phase, contention-based ranging may be used when discovering the merchant device. The merchant device may operate as a controller/initiator of contention-based ranging. If there are the plurality of merchant devices, the merchant devices may initiate UWB sessions in line with the reference session generated by the time reference device using appropriate time offsets to prevent conflicts between UWB messages from the merchant devices. The customer device may operate as a controllee/responder of contention-based ranging. The customer device may respond to one of the merchant devices in the payment-available zone.

In the secure ranging preparation phase, when selecting a merchant device, if there are more than one merchant device, they may be discovered by the customer device.

In the secure ranging preparation phase, an in-band secure ranging setup procedure may be performed. The customer device and the merchant device may establish a secure ranging session and safely perform payment transactions through the secure ranging session.

In operation 807 within the secure ranging phase, the customer device and merchant device/payment infrastructure may establish a UWB secure ranging session through either in-band or OOB method. The customer device and the merchant device/payment infrastructure will perform UWB secure ranging before performing a payment transaction.

In operation 808 within a payment transaction phase, the customer device may request user intention/verification before performing a payment transaction. The customer device and the merchant device may perform payment transactions at a security level sufficient to meet security requirements required by the service provider.

In operation 809 within the payment transaction phase, the customer device may perform an online in-app payment method to complete the payment process.

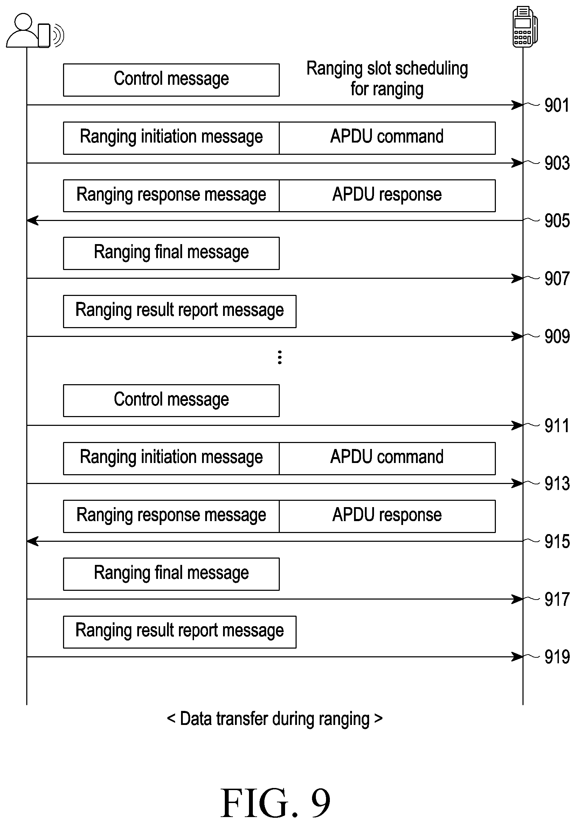

FIG. 9 illustrates a payment transaction data exchange procedure during ranging according to an embodiment of the disclosure.

In the payment transaction phase, a data transfer procedure may be performed during ranging. The customer device and the merchant device may exchange data on the payment protocol during the TWR. In this case, data transfer during ranging may be used as a ranging method.

In operation 901, the customer device may transmit a control message for scheduling a ranging slot for ranging to the merchant device.

In operation 903, the customer device may transmit a ranging initiation message (RIM) and an APDU command message to the merchant device. In operation 905, the merchant device may transmit a ranging response message (RRM) and an APDU response message to the customer device.

In operation 907, the customer device may transmit a ranging final message to the merchant device. In operation 909, the customer device may transmit a ranging result report message to the merchant device.

Thereafter, the customer device and the merchant device may perform operations 911 to 919 that are the same as or substantially the same as operations 901 to 909.

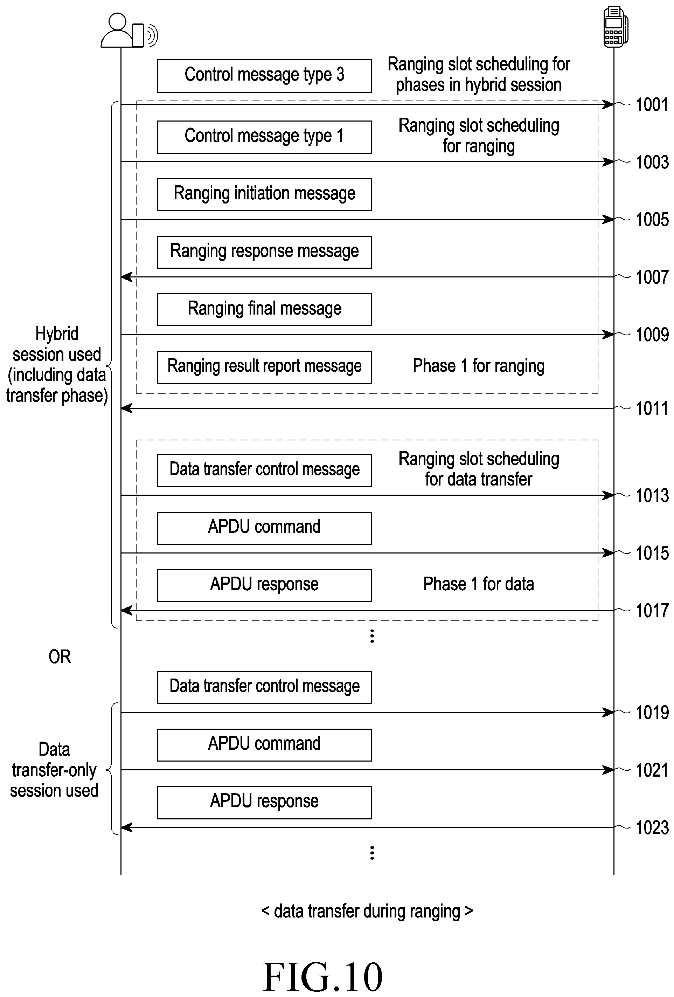

FIG. 10 illustrates a payment transaction data exchange procedure using data transfer or session according to an embodiment of the disclosure.

The customer device and the merchant device may exchange data for a payment protocol through a dedicated session or phase for data transfer. The customer device and the merchant device may establish a data transfer-only session or a data transfer phase as a secondary session in a hybrid session.

In operation 1001, the customer device may transmit control message type 3 for scheduling a ranging slot for phases in the hybrid session to the merchant device. In operation 1003, the customer device may transmit control message type 1 for scheduling a ranging slot for ranging to the merchant device.

In operation 1005, the customer device may transmit the RIM to the merchant device. In operation 1007, the merchant device may transmit the RRM to the customer device. In operation 1009, the customer device may transmit a ranging final message to the merchant device. In operation 1011, the merchant device may transmit a ranging result report message to the customer device.

In operation 1013, the customer device may transfer a data transfer control message for scheduling a ranging slot for data transfer to the merchant device. In operation 1015, the customer device may transmit an APDU command message to the merchant device. In operation 1017, the merchant device may transmit an APDU response message to the customer device.

According to an embodiment, in operations 1003 to 1017, a hybrid session may be used including a data transfer phase.

According to another embodiment, instead of the hybrid session, a data transfer only session may be used in operations 1019 to 1023.

In operation 1019, the customer device may transfer a data transfer control message for scheduling a ranging slot for data transfer to the merchant device. In operation 1021, the customer device may transmit an APDU command message to the merchant device. In operation 1023, the merchant device may transmit an APDU response message to the customer device.

According to an embodiment, a feature profile and a device profile may be defined to support a FiRa tap-free payment service.

Table 1 lists required technical features to be performed between the customer device and the merchant device.

**[Table 1]**

| Component | Features | M/O | Reference - specification section |
|---|---|---|---|
| FiRa Framework | | | |
| Service Interface | | | |
| FiRa Profile Manager | Able to manage and run multiple ranging methods in the given order, | O | BLE Advertisement Message Format |
| | e.g., | | |
| | start payment service discovery with either BLE OOB or UWB Advertisement | | |
| | Start TWR with time-scheduled or contention mode according to | | |
| | the service type that a store supports | | |
| | Parsing the application data in payload IE | | |
| Secure Component | Necessary to support Dynamic STS and perform payment protocol with a payment applet in an SE | CM | |
| Type of STS | Static STS | M | In cased of OWR for AoA ranging method, STS IV, vendor ID should be fixed value. |
| | Dynamic STS | CM | |
| | Provisioned STS | O | |
| | | | Vendor ID == 0x5A18 , which is FiRaOUI |
| | | | STS IV== 0x4649524153500a , which is FIRAP |
| UWB MAC | Time-scheduled TWR | O | MAC requirement spec v2.0 |
| | Contention-based TWR | O | |
| | OWR for AoA measurement | O | |
| | OWR UL-TDoA | O | |
| | OWR DL-TDoA | O | |
| | Data Transfer during Ranging | O | |
| | Data Transfer phase | O | |
| | Hybrid ranging | O | |
| UWB PHY | | M | PHY requirement spec v2.0 |

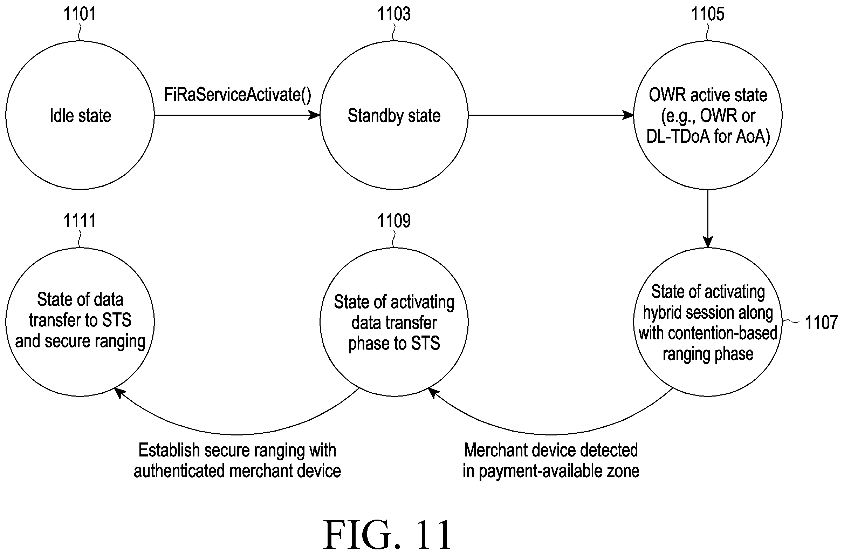

FIG. 11 illustrates an example of a state transition diagram according to an embodiment of the disclosure.

In the FiRa frame network, the payment profile manager may manage the state transition diagram to sequentially execute various ranging methods step by step. The state transition occurs through successful completion of the procedure to be performed in the current state using the ranging method in progress or the user's activity through the user interface of the payment application.

According to an embodiment, the payment service identifier may specify a state transition diagram including criteria of state transitions and a set of ranging methods used by states.

Referring to FIG. 11, the idle state 1101 may transition to the standby state 1103 based on FiRaServiceActivate(). The standby state 1103 may transition to an OWR activation state (Activate OWR) 1105 (e.g., OWR or DL-TDoA for AoA), and the OWR activation state (Activate OWR) 1105 may transition to a state 1107 that activates a hybrid session together with a contention-based ranging phase.

If the merchant device is detected within the payment-available zone, the state 1107 of activating the hybrid session together with the contention-based ranging phase may transition to the state 1109 of activating the data transfer phase to the STS.

If secure ranging is established with the authenticated merchant device, the state 1109 of activating the data transfer phase to the STS may transition to the data transfer state 1111 to the secure ranging and STS.

Meanwhile, at least one payment application configuration may be set through the FIRAServiceinit() API by the payment application in the customer device.

The payment application configuration may include a service configuration, a UWB configuration, and an OOB configuration.

According to an embodiment, the profile ID of the tap-free payment profile in the service configuration may be "XX". The profile ID value may be broadcast during the device and service discovery phase. The profile ID value may be used in the FIRAServiceinit () API.

According to an embodiment, an Object ServiceConfiguration for the service configuration may be configured as shown in Table 2.

**[Table 2]**

| Parameter | Value | Type | Description |
|---|---|---|---|
| Profile ID | XX | Integer | Identifier for the FiRa Tap-Free Payment Profile. |
| profilePriority | Assigned by platform | Integer | Priority of the FiRa Profile instance. It is used by the FiRa Framework to allocate resources appropriately. |
| | | | 1 = highest priority; 100 = lowest priority |
| | | | The use of the Profile priority is platform dependent. |
| serviceDeploymentOption | 4 | Integer | Indicates the chosen deployment option |
| | | | 1= payment service deployment scenario 1 |
| | | | 2= payment service deployment scenario 2 |
| | | | 3= payment service deployment scenario 3 |
| | | | 4= payment service deployment scenario 4 |
| serviceAppletID | N/A | Integer | AID of Payment Applet to be used by the FiRa Framework. |
| serviceAdfID | N/A | Integer | Tag OID of the ADF used for a payment service deployment |
| ConfigurationID | | | ID of the predefined configuration to be used |

According to an embodiment, the Object ServiceConfiguration for UWB configuration may be configured as shown in Table 3.

**[Table 3]**

| **Parameter** | **Value** | **Description** |
|---|---|---|
| UWBRole | | |
| rangingRoundUsage | | |
| multiNodeMode | | |
| RFRAMEConfiguration | | |
| STSConfig | | |
| roundHopping | | |
| scheduledMode | | |
| maximumContentionPhaseLength | | |
| ToFReport | | |
| AoAAzimuthReport | | |
| AoAElevationReport | | |
| AoAFOMReport | | |
| blockStriding | | |
| slotDuration | | |
| slotsPerRangingRound | | |
| rangingInterval | | |
| txDelayValue | 1 | |
| mtuSize | 250 | |
| minFramesPerRR | 4 | |
| channelNumber | 9 | |
| preambleCodeIndex | 27 | |
| PRF Mode | HPRF | |
| SP0PHYParameterSet | N/A | |
| SP1PHYParameterSet | 6 | |
| SP3PHYParameterSet | N/A | |
| maxRetry | N/A | |
| constraintLengthConvolutionalCode | 3 | |
| UWBInitiationTime | N/A | |
| keyRotationRate | N/A | |
| MACFCSType | 16 byte | |
| RangingRoundControl | N/A | |
| vendorID | 0x5A18 | 16 bits unsigned integer, Unique ID of vendor. Vendor in this context is the FiRa enabled application provider. This is used to set phyVupper64[15:0] as defined in FiRa MAC technical requirements |
| STSIV | 0x4649524153500A | |

According to an embodiment, all other parameters in the UWB configuration are configurable by the FiRa-enabled application provider using the FIRAServiceinit () API or the FiRa UWB framework.

According to an embodiment, the Object ServiceConfiguration for OOB configuration may be configured as shown in Table 4.

**[Table 4]**

| Parameters | **Value** | **Description** |
|---|---|---|
| | | |
| OOBType | 0 | This indicates the type of OOB connection used for FiRa Service establishment |
| | | None - value '0' |
| | | Bluetooth LE - value '1' |
| | | RFU - all other values |
| OOBBLERole | N/A | This indicates the role of FiRa Device for OOB GAP and GATT |
| | | Scanner/Central & GATT Client (CP) Value 0 |
| | | Advertiser/Peripheral & GATT Server (FCS) Value 1 |
| | | Peripheral Value 2 |
| | | Central. Value 3 |

According to an embodiment, the BLE advertisement message format used for payment service may be configured as shown in Table 5.

**[Table 5]**

| Field name | Size (bits) | Coding explanation |
|---|---|---|
| Length | 8 | Number of octets inside AD Type element (all subsequent data within this table). Value is variable (3-256). |
| Data Type | 8 | Value set to FFh as per Bluetooth SIG specification assigned numbers. |
| Company Identifier | 16 | FiRa Consortium identifier assigned by Bluetooth SIG (little endian encoding - e.g. value 7500h means decimal value 117). |
| UWB indication data | 24 | String is encoded as follows (from the most significant bit): |
| | | 4 bits - Type of FiRa specific field = 1h (0001b). |
| | | 4 bits - Length of FiRa specific field = variable (2-15 aka 0010b-1111b). Counting all the octets of subsequent data within UWB indication data field. |
| | | 8 bits - Capabilities field encoded as follows: |
| | | Bit 7 (most significant, mask 80h) - UWB technology support as per FiRa specifications (1b if device supports UWB, 0b otherwise). |
| | | Bit 6 (mask 40h) - ISO14443 technology support (1b if device supports any of ISO14443 RFID technologies in reader mode, 0b otherwise). |
| | | Bit 5 (mask 20h) - Presence of UWB regulatory information in advertisement or extended advertisement or scan request and scan response packets (1b if present, 0b otherwise). |
| | | Bit 4 (mask 10h) - UWB regulatory information availability as a OOB UWB message (1b if available, 0b otherwise). |
| | | Bits 3 (mask 08h) - Presence of FiRa Profile Information in advertisement or extended advertisement or scan request and scan response packets (1b if present, 0b otherwise). |
| | | Bits 2 (mask 04h) - FiRa Profile Information availability as a OOB UWB message (1b if available, 0b otherwise). |
| | | Bits 1 (mask 02h) - UWB configuration data in advertisement (1b if present, 0b otherwise) |
| | | Bit 0 (mask 01h) - Indicates if Advertiser/Peripheral also operates as Bluetooth GAP Scanner/Central (in dual mode). Value 1b indicates support of dual role, value 0b indicates support of Advertising/Peripheral role only. |
| | | 8 bits - Bluetooth RSSI threshold indication for Bluetooth GAP Central signaling if/when it should initiate Bluetooth connection. Value is interpreted as signed integer in dBm units (examples: 00h = 0dBm, FFh = -1dBm, F8h = -8dBm, 0Ah = 10dBm, 80h = -128dBm, 7Fh = 127dBm). |
| | | Value 80h (aka -128) has specific meaning of "connect immediately regardless RSSI value measured". |
| | | Subsequent data - reserved (void). |
| UWB Configuration | variable | String is encoded as follows (from the most significant bit): |
| | | 4 bits - Type of FiRa specific field = 5h (0010b). |
| | | 4 bits - Length of FiRa specific field = variable (2-15 aka 0010b-1111b). Counting all the octets of subsequent data within Vendor specific data field. |
| | | 32 bits - UWB session ID |
| | | 8 bits - service ID |
| | | 8 bits - UWB configuration ID |
| | | 4 bits - channel number |
| | | 8 bits - preamble CI |
| | | 16 bits - Controller short MAC address |
| | | 4 bits - Device Role |
| | | 48 bits - STS IV for static STS |
| Service Specific Information | variable | String is encoded as follows (from the most significant bit): |
| | | 4 bits - Type of FiRa specific field = 5h (0011b). |
| | | 4 bits - Length of FiRa specific field = variable (2-15 aka 0010b-1111b). Counting all the octets of subsequent data within Vendor specific data field. |
| | | 8 bits - profile IDVariable - service specific information |

In Table 5, the length field indicates the number of octets for all subsequent data within the BLE advertisement message.

In Table 5, the data type field indicates the values according to Bluetooth SIG standard allocation numbers.

In Table 5, the company identifier field indicates the FiRa consortium identifier allocated by the Bluetooth SIG.

In Table 5, the UWB indication data field indicates encoded UWB-related bitmap information.

In Table 5, the UWB configuration field indicates information about the UWB configuration required to start the UWB service. The user device starts activating UWBS using the corresponding parameters included in the field.

In Table 5, the service specific information field indicates information related to a specific UWB payment service. According to an embodiment, the value of the service specific information will be formatted according to Table 6.

**[Table 6]**

| Field name | Size (bits) | Coding explanation |
|---|---|---|
| Length | 8 | The number of octets for all subsequent data within this table. |
| UWB payment identifier | 8 | The UWB payment identifier can be used to identify the payment service among the various UWB payment which the retail can support. By using this service identifier, the user device is ready to start the appropriate UWB payment service. The UWB payment identifier shall be the bitmap encoded as follows: |
| | | Bit8: DL-TDoA supported |
| | | Bit7: Contention-based ranging supported |
| | | Bit6: In-band UWB payment transaction supported |
| | | Bit5 - Bit0: RFU |
| Retail identifier | Variable | The retail identifier can be used to identify the name or type of the retail. The retail identifier shall be TLV structure which consists of the following information |
| | | The name of retail in String (Tag: 0x00) |
| | | The type of retail in String (Tag: 0x01) |

According to an embodiment, when UWB advertisement is used to provide payment service information and retail store information, the advertiser will transmit an AoA measurement message together with a data message payload IE including the content defined by Table 7.

According to an embodiment, the UWB advertisement message format may be configured as shown in Table 7.

**[Table 7]**

| Parameter | Size (bits) | Notes |
|---|---|---|
| AdvertiserID | 16 | Unique ID in an application |
| TypeClass | 8 | A class of data format contained in Advertisement Data |
| | | 0x00: RFU |
| | | 0x01: URI as defined in RFC 3986 |
| | | 0x02: Media Types as defined in RFC 2046 |
| | | 0x03: UWB configuration parameter |
| | | 0x04: Application-defined data (or OS-defined data) |
| | | 0x05: Advertisement for FiRa service |
| | | 0x05-0xFE: RFU |
| | | 0xFF: Vendor-defined type |
| Data Type Length | 8 | Length of Advertisement Data Type field (in octets) |
| | | The value shall be 8. |
| Advertisement Data Type | 8 | 0x01: FiRa Tap-Free Payment service |
| | | 0x02-0xFF: RFU |
| Advertisement Data Length | 16 | Length of Advertisement Data field (in octets) |
| Advertisement Data | Variable | As defined in Error! Reference source not found. |

According to an embodiment, the content of the advertisement data included in the UWB advertisement message format may be configured as shown in Table 8.

**[Table 8]**

| Field name | Size (bits) | Coding explanation |
|---|---|---|
| UWB Configuration | variable | String is encoded as follows (from the most significant bit): |
| | | 4 bits - Type of FiRa specific field = 5h (0010b). |
| | | 4 bits - Length of FiRa specific field = variable (2-15 aka 0010b-1111b). Counting all the octets of subsequent data within Vendor specific data field. |
| | | 32 bits - UWB session ID |
| | | 8 bits - service ID |
| | | 8 bits - UWB configuration ID |
| | | 4 bits - channel number |
| | | 8 bits - preamble CI |
| | | 16 bits - Controller short MAC address |
| | | 4 bits - Device Role |
| | | 48 bits - STS IV for static STS |
| UWB payment identifier | 8 | The UWB payment identifier can be used to identify the payment service among the various UWB payment which the retail can support. By using this service identifier, the user device is ready to start the appropriate UWB payment service. The UWB payment identifier shall be the bitmap encoded as follows: |
| | | Bit8: DL-TDoA supported |
| | | Bit7: Contention-based ranging supported |
| | | Bit6: In-band UWB payment transaction supported |
| | | Bit5 - Bit0: RFU |
| Retail identifier | Variable | The retail identifier can be used to identify the name or type of the retail. The retail identifier shall be TLV structure which consists of the following information |
| | | The name of retail in String (Tag: 0x00) |
| | | The type of retail in String (Tag: 0x01) |

In the disclosure, a secure channel may be used to set up an encryption-enabled communication channel between payment applets on the merchant device and the customer device.

According to an embodiment, the public keys may follow the format defined in Table 8 of Global Platform Confidential Card Content Management Card Specification v2.3 - Amendment A, Version 1.2.

ECDH is the Ephemeral Unified Model, C(2e,2s, ECC CDH) as defined in NIST Special Publication 800-56A Revision 3 - Recommendation for Pair-Wise Key Establishment Schemes Using Discrete Logarithm Cryptography.

According to an embodiment, keys and data for the secure channel protocol may be configured as shown in Table 9.

**[Table 9]**

| Key name | Type/Length | Purpose | Presence |
|---|---|---|---|
| CERT. Wallet | ECC-P256 | Certificates and private key in each device (Wallet and Terminal). Public keys are extracted from this certificate. | Mandatory |
| CERT. Terminal | | | |
| SK.Wallet | ECC-P256 | | Mandatory |
| SK.Terminal | | | |
| CERT.Issuer | ECC-P256 | Certificate to verify the CERT.Wallet and CERT.Terminal | Optional |

### <Encryption algorithm, key usage and derivation>

ECDH is the Full Unified Model, C(2e,2s, ECC CDH) as defined in NIST Special Publication 800-56A Revision 3 - Recommendation for Pair-Wise Key Establishment Schemes Using Discrete Logarithm Cryptography.

Key derivation to generate the message authentication code and AES encryption key from the ECDH will use NIST SP 800-56C adopting an extract-then-derive expand key, two-step approach.
- For random extraction, it will use AES128-CMAC for message authentication code.
- The key derivation is performed in counter mode using AES128 CMAC for PRF as per NIST SP 800-108. The PRF used in the KDF shall be a CMAC as specified in NIST 800-38B, used along with a full output length of 16 bytes.

The input data is constructed using the following fields as defined in NITS SP800-108. It should be noted that it is allowed to define an order different from that proposed in the standard, as long as it is clearly defined.
- 2-byte label, identifying the purpose of the key
- set to 0x0001 for encryption (K-ENC)
- set to 0x0000 for message authentication (K-MAC)
- 2-byte counter, always setting to 0x1010 only when 128-bit keys are generated.
- 2-byte length, always setting to 0x8080 only when 128-bit keys are generated.
- 10-byte context, all set to 0x00

According to another embodiment, a certificate format used to authenticate the merchant device and establish secure ranging between the customer device and the merchant device may be established. The certificate format is for the secure channel protocol and may follow the X.509 certificate format or may be the format specified in Table 10.

**[Table 10]**

| Description | Length | Presence |
|---|---|---|
| Serial number (ID.Device is used for Wallet Application installed Mobile Device and Terminal) | 1-16 | Mandatory |
| CA Identifier | Variable | Optional |
| Subject identifier (ID.Wallet or ID. Terminal) | 16 | Mandatory |
| Effective Date (YYYYMMDD, BCD format) | 4 | Optional |
| Expiration Date (YYYYMMDD, BCD format) | 4 | Optional |
| Public Key Point Q (in uncompressed encoding as specified in [TR-03111] section 3.2.1) | 65 | Mandatory |
| Key Parameter Reference (00 for NIST P256) | 1 | Optional |
| Signature value | 64 | Mandatory |

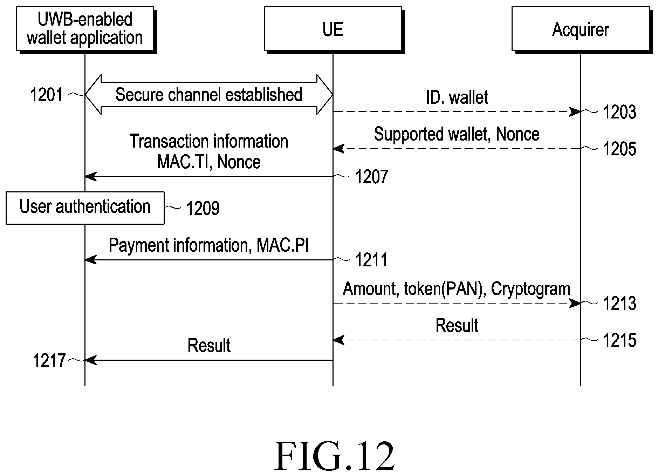

FIG. 12 illustrates an example of direct communication for a payment procedure according to an embodiment of the disclosure.

Referring to FIG. 12, in operation 1201, a secure channel may be established between the UWB-enabled wallet application and the UE. According to an embodiment, the UE may verify the certificate of the UWB-enabled wallet application while the secure channel is established. The certificate may include an ID.Wallet and an ID.Device that allow backend systems (e.g., acquirer and issuer) to identify a particular UWB-enabled wallet application.

In operation 1203, the UE may transmit identification information (ID.Wallet) about the wallet to the acquirer. In operation 1205, the acquirer may transmit supported wallet information and nonce to the UE.

According to an embodiment, the nonce is a random number used for one-time use, and the nonce may be an approved code or number from the acquirer. The nonce may be mapped to the ID.Wallet and ID.Device together with the transaction information about the acquirer's system.

In operation 1207, the UE may transmit at least one of transaction information, MAC.TI, and nonce to the UWB-enabled wallet application. In operation 1209, the UWB-enabled wallet application may perform a user authentication procedure. In operation 1211, the UWB-enabled wallet application may transmit the payment information and MAC.PI to the UE.

According to an embodiment, the MAC.TI may be calculated based on Equation 1. "MAC.TI = CMAC(K-MAC, ID.Terminal || Transaction Information ∥ Padding"

According to an embodiment, the MAC.PI may be calculated based on Equation 2. "MAC.PI = CMAC(K-MAC, Nonce || ID.Wallet || ID.Device ∥ Payment Information || Padding))"

Padding is to fix the AES block size and may be performed according to section 6.3 of RFC 5652.

In operation 1213, the UE may transmit at least one of amount, token, and cryptogram to the acquirer. In operation 1215, the acquirer may transmit result information for the payment transaction to the UE. In operation 1217, the UE may transmit the result information for the payment transaction to the UWB-enabled wallet application.

According to an embodiment, the transaction information and payment information may be exchanged through the secure channel, and the UE may forward the decrypted payment information to the backend system, such as the acquirer and/or issuer, and receive an acknowledgement. The transaction may be completed via a message containing the final result information.

According to an embodiment, the transaction information may be private information transmitted from the UE to the UWB-enabled wallet application. According to an embodiment, the transaction information may include at least one field defined in Table 11.

**[Table 11]**

| Description | Length | Presence |
|---|---|---|
| Merchant Name | 16 | Mandatory |
| Amount | 8 | Mandatory |
| Merchant ID | 8 | Optional |
| Order Number | 16 | Optional |
| Shipping Address | 48 | Optional |
| Billing Address | 48 | Optional |
| Address Visibility | 1 | Optional |
| Payment Protocol | 1 | Optional |
| Merchant Country Code | 1 | Optional |
| Supported Card Brands | 1 | Optional |
| Extra Information | Variable | Optional |

According to an embodiment, the payment information may be private information transmitted from a UWB-enabled wallet application to the UE in an encrypted format through a secure channel. According to an embodiment, the payment information may include at least one field defined in Table 12.

**[Table 12]**

| Description | Length (bytes) | Presence |
|---|---|---|
| Length of Card Number or Token | 8 | Mandatory |
| Card Number or Token | Variable | Mandatory |
| Expiration Data | 8 | Conditional Mandatory |
| Auth Service | 8 | Optional |
| Purchased total currency, Amount | 8 | Optional |
| Billing Information | 48 | Optional |
| Extra Information | Variable | Optional |

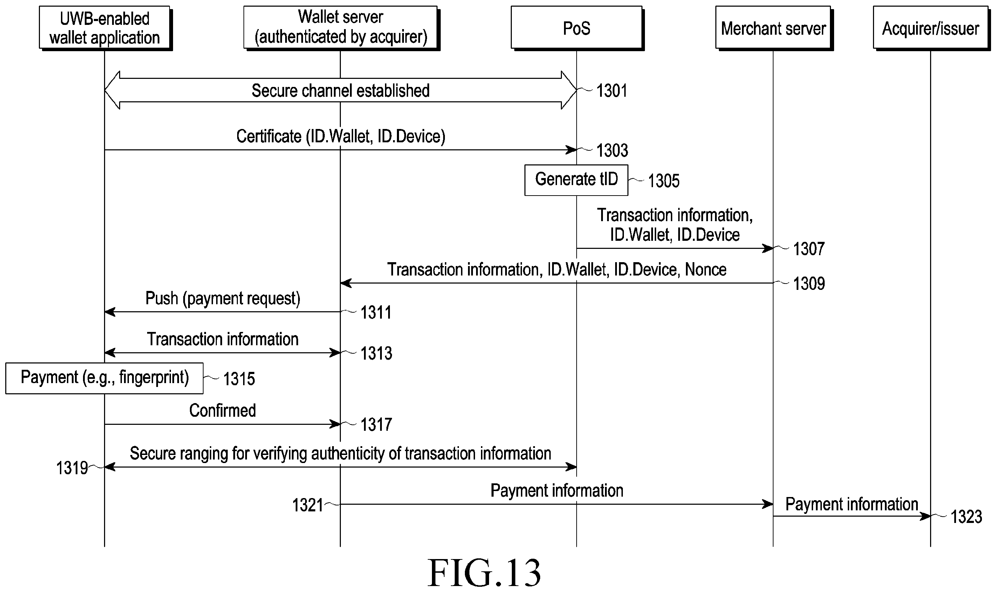

FIG. 13 illustrates an example of indirect communication for a payment procedure according to an embodiment of the disclosure.

In indirect payment transactions, the UWB channel may be used only for secure ranging in terms of technology. After the secure channel is established, secure ranging may be performed to confirm a payment transaction. The remaining information for payment, such as transaction information and payment information, may be exchanged in the background using general Internet communication and/or cloud-to-cloud (C2C) communication.

Referring to FIG. 13, in operation 1301, a mobile wallet application and a PoS may establish a secure channel. In operation 1303, the wallet application may transmit a certificate (including ID.Wallet and ID.Device) to the PoS. In operation 1305, the PoS may generate a tID (or a transaction ID). In operation 1307, the PoS may transmit transaction information, ID.Wallet, and ID.Device to the customer server. In operation 1309, the customer server may transmit transaction information, ID.Wallet, ID.Device, and nonce to the wallet server (authorized by the acquirer).

In operation 1311, the wallet server may transmit a push message requesting payment to the wallet application. In operation 1313, the wallet server and the wallet application may exchange transaction information. In operation 1315, the wallet application may perform a payment operation through a user input (e.g., fingerprint). In operation 1317, the wallet application may transmit a payment confirmation message to the wallet server.

In operation 1319, the wallet application may perform secure ranging with the PoS to verify the authenticity of the transaction information. In operation 1321, the wallet server may transmit payment information to the customer server. In operation 1323, the customer server may transmit payment information to the acquirer/issuer.

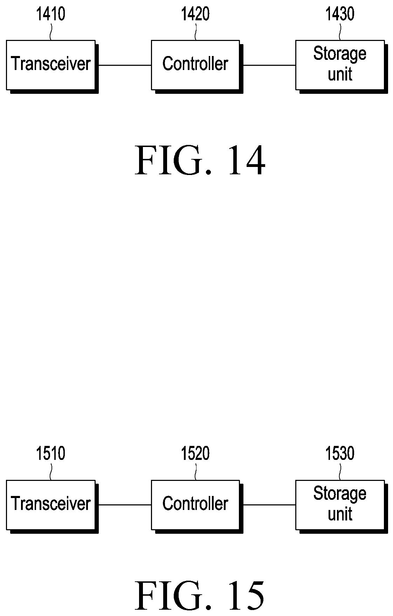

FIG. 14 illustrates a structure of a first UWB device according to an embodiment of the disclosure.

In the embodiment of FIG. 14, the first UWB device may correspond to the UWB device of FIG. 1, include a UWB device, or may be an electronic device that may include a portion of a UWB device. The first UWB device may be a customer device (or user device) for the UWB-based payment service described above in FIGS. 1 to 13.

Referring to FIG. 14, the first UWB device may include a transceiver 1410, a controller 1420, and a storage unit 1430. In the present disclosure, the controller may be defined as a circuit, an application-specific integrated circuit, or at least one processor.

The transceiver 1410 may transmit and receive signals to/from another entity.

The controller 1420 may control the overall operation of the customer device (or user device) according to the embodiment proposed in the disclosure. For example, the controller 1420 may control inter-block signal flow to perform the operations according to the above-described flowchart. Specifically, the controller 1420 may control the operations of the first UWB device described above with reference to FIGS. 1 to 13.

The storage unit 1430 may store at least one of information transmitted/received via the transceiver 1410 and information generated via the controller 1420. For example, the storage unit 1430 may store information and data necessary for the method described above with reference to FIGS. 1 to 13.

The controller 1420 may receive, from a second UWB device, an advertisement message including UWB payment identification information (UWB payment identifier) indicating a payment method supported by a payment service between the first UWB device and the second UWB device and location information (retail identifier) about a location where the payment service is performed. The controller 1420 may perform UWB ranging based on the UWB payment identification information (UWB payment identifier) and the location information (retail identifier) about the location where the payment service is performed. The controller 1420 may perform a payment transaction based on a result of the UWB ranging.

According to an embodiment, the advertisement message may be configured according to a BLE advertisement message format. According to an embodiment, the advertisement message may be configured according to a UWB advertisement message format.

According to an embodiment, the UWB payment identification information (UWB payment identifier) may include any one of information indicating downlink time difference of arrival (DL-TDoA) support, information indicating contention-based ranging support, information indicating in-band UWB payment transaction support, and reserved future use (RFU).

According to an embodiment, the location information (retail identifier) about the location where the payment service is performed may include at least one of name information about a retail store where the payment service is performed and type information about the retail store.

According to an embodiment, the advertisement message may further include UWB configuration information (UWB configuration), and the UWB configuration information may include at least one of a UWB session ID, a service ID, a UWB configuration ID, a channel number, and a device role.

According to an embodiment, a payment profile manager in a framework of the first UWB device may control the first UWB device to simultaneously or sequentially use a plurality of UWB ranging methods.

According to an embodiment, the payment profile manager may set a state transition diagram for processing the plurality of UWB ranging methods.

According to an embodiment, the controller 1420 may set a payment-available zone based on at least one of an angle of arrival (AoA) azimuth, a range of an AoA elevation value, and a distance value according to a result of TWR.

FIG. 15 illustrates a structure of a second UWB device according to an embodiment of the disclosure.

In the embodiment of FIG. 15, the first UWB device may correspond to the UWB device of FIG. 2, include a UWB device, or may be an electronic device that may include a portion of a UWB device. The second UWB device may be, e.g., a merchant device for UWB-based payment service.

Referring to FIG. 15, the second UWB device may include a transceiver 1510, a controller 1520, and a storage unit 1530. In the present disclosure, the controller may be defined as a circuit, an application-specific integrated circuit, or at least one processor.

The transceiver 1510 may transmit and receive signals to/from another entity.

The controller 1520 may control the overall operation of the electronic device according to an embodiment. For example, the controller 1520 may control inter-block signal flow to perform the operations according to the above-described flowchart. Specifically, the controller 1520 may control the operations of the second UWB device described above with reference to FIGS. 1 to 13.

The storage unit 1530 may store at least one of information transmitted/received via the transceiver 1510 and information generated via the controller 1520. For example, the storage unit 1530 may store information and data necessary for the method described above with reference to FIGS. 1 to 13.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for operating a first ultra-wide band (UWB) device, the method comprising:
receiving, from a second UWB device, an advertisement message including UWB payment identification information (UWB payment identifier) indicating a payment method supported by a payment service between the first UWB device and the second UWB device and location information (retail identifier) about a location where the payment service is performed;
performing UWB ranging based on the UWB payment identification information (UWB payment identifier) and the location information (retail identifier) about the location where the payment service is performed; and
performing a payment transaction based on a result of the UWB ranging.

2. The method of claim 1, wherein the advertisement message is configured according to a BLE advertisement message format, or the advertisement message is configured according to a UWB advertisement message format.

3. The method of claim 1, wherein the UWB payment identification information (UWB payment identifier) includes any one of information indicating downlink time difference of arrival (DL-TDoA) support, information indicating contention-based ranging support, information indicating in-band UWB payment transaction support, and reserved future use (RFU).

4. The method of claim 1, wherein the location information (retail identifier) about the location where the payment service is performed includes at least one of name information about a retail store where the payment service is performed and type information about the retail store.

5. The method of claim 1, wherein the advertisement message further includes UWB configuration information (UWB configuration), and
wherein the UWB configuration information includes at least one of a UWB session ID, a service ID, a UWB configuration ID, a channel number, and a device role.

6. The method of claim 1, wherein a payment profile manager in a framework of the first UWB device controls the first UWB device to simultaneously or sequentially use a plurality of UWB ranging methods.

7. The method of claim 6, wherein the payment profile manager sets a state transition diagram for processing the plurality of UWB ranging methods.

8. The method of claim 1, further comprising setting a payment-available zone based on at least one of an angle of arrival (AoA) azimuth, a range of an AoA elevation value, and a distance value according to a result of TWR.

9. A first ultra-wideband (UWB) device, comprising:
a transceiver; and
a controller, wherein the controller is configured to:
receive, from a second UWB device, an advertisement message including UWB payment identification information (UWB payment identifier) indicating a payment method supported by a payment service between the first UWB device and the second UWB device and location information (retail identifier) about a location where the payment service is performed;
perform UWB ranging based on the UWB payment identification information (UWB payment identifier) and the location information (retail identifier) about the location where the payment service is performed; and
perform a payment transaction based on a result of the UWB ranging.

10. The first UWB device of claim 9, wherein the advertisement message is configured according to a BLE advertisement message format, or the advertisement message is configured according to a UWB advertisement message format.

11. The first UWB device of claim 9, wherein the UWB payment identification information (UWB payment identifier) includes any one of information indicating downlink time difference of arrival (DL-TDoA) support, information indicating contention-based ranging support, information indicating in-band UWB payment transaction support, and reserved future use (RFU).

12. The first UWB device of claim 9, wherein the location information (retail identifier) about the location where the payment service is performed includes at least one of name information about a retail store where the payment service is performed and type information about the retail store.

13. The first UWB device of claim 9, wherein the advertisement message further includes UWB configuration information (UWB configuration), and
wherein the UWB configuration information includes at least one of a UWB session ID, a service ID, a UWB configuration ID, a channel number, and a device role.

14. The first UWB device of claim 9, wherein a payment profile manager in a framework of the first UWB device controls the first UWB device to simultaneously or sequentially use a plurality of UWB ranging methods.

15. The first UWB device of claim 9, wherein the controller sets a payment-available zone based on at least one of an angle of arrival (AoA) azimuth, a range of an AoA elevation value, and a distance value according to a result of TWR.
